# EUROPEAN PATENT SPECIFICATION

(11) **EP 3 505 474 B1**
(45) Date of publication and mention of the grant of the patent: **27.01.2021**
(21) Application number: 18210561.9
(22) Date of filing: 05.12.2018
(51) Int. Cl.: B66B 1/24, B66B 1/46

(54) **METHOD OF DISPATCHING OPTIMIZATION BASED ON SENSING**
VERFAHREN ZUR ABFERTIGUNGSOPTIMIERUNG AUF BASIS VON ERFASSUNG
PROCÉDÉ D'OPTIMISATION DE RÉPARTITION SUR LA BASE D'UNE DÉTECTION

(30) Priority: 05.12.2017 US 201715832006
(43) Date of publication of application: 03.07.2019
(73) Proprietor: Otis Elevator Company, Farmington, Connecticut 06032 (US)
(72) Inventor: KUENZI, Adam, Salem, OR Oregon 97302-1142 (US); SCOVILLE, Bradley Armand, Farmington, CT Connecticut 06032 (US)
(74) Representative: Dehns

(56) References cited:
- US-A1- 2008 011 557
- US-A1- 2016 031 676

## Description

### BACKGROUND

The subject matter disclosed herein generally relates to the field of elevator systems, and more particularly to an apparatus and method for calling elevator cars within the elevator system.

Existing elevator systems allow a user to submit an elevator call (e.g., a hall call or a destination call) using their own mobile device (e.g., a smartphone). Current systems may not be able to effectively and inexpensively determine whether the specific user who made the elevator call actually ends up boarding the elevator car. US2016/0031676 describes a method for serving passenger specific destination calls in which acceleration data of a terminal device held by a passenger is compared to the acceleration data of each elevator car leaving a floor. If there is correlation between the acceleration data of the terminal device and any one of the elevator cars, the elevator car is guided to the destination floor of the passenger.

### BRIEF SUMMARY

According to one embodiment, a method of operating an elevator system is provided according to claim 1.

Further embodiments may include: adjusting operation of the first elevator car in response to determining that the mobile device is not within the first elevator car.

Further embodiments may include: determining that the mobile device is within the first elevator car when the acceleration data of the mobile device is about equal to the elevator acceleration data of the first elevator car.

Further embodiments may include that the acceleration data of the mobile device includes at least one of an actual acceleration rate, a derivative of the actual acceleration rate, a speed profile of the mobile device, and a time period of acceleration.

Further embodiments may include that the elevator acceleration data includes at least one of an actual acceleration rate, a derivative of the actual acceleration rate, a speed profile of the elevator car, and a time period of acceleration.

Further embodiments may include that the adjusting further comprises: reassigning the first elevator car to a second elevator call.

Further embodiments may include: adjusting operation of the first elevator car in response to determining that the mobile device is within the second elevator car.

Further embodiments may include: reassigning the second elevator car to the first elevator call.

Further embodiments may include: transmitting a prompt to the mobile device requesting a destination floor for the second elevator car.

Further embodiments may include: moving the second elevator car to a destination floor of the second elevator car; and moving a third elevator car to the destination floor of the second elevator car.

Further embodiments may include: detecting an elevator system position of the elevator system, wherein the determining further comprises: determining whether the mobile device is within the first elevator car based upon the elevator system position and the comparison of the acceleration data of the mobile device and the elevator acceleration data of the first elevator car.

Further embodiments may include that the elevator system position includes a position of elevator door operably connected to an elevator car of the elevator system.

Further embodiments may include that the elevator system position includes an elevator moving state of an elevator car of the elevator system.

According to another embodiment, a controller for an elevator system is provided according to claim 12. The controller comprises: a processor; and a memory comprising computer-executable instructions that, when executed by the processor, cause the elevator system to perform operations according to any of the methods disclosed above.

Further embodiments may include that the operations further comprise: adjusting operation of the first elevator car in response to determining that the mobile device is not within the first elevator car.

Further embodiments may include that the operations further comprise: determining that the mobile device is within the first elevator car when the acceleration data of the mobile device is about equal to the elevator acceleration data of the first elevator car.

Technical effects of embodiments of the present disclosure include the ability for an elevator control system to receive elevator destination calls from a mobile device and then detect whether a person carrying the mobile device boards an elevator car through comparison of acceleration data from the elevator car and the mobile device.

The foregoing features and elements may be combined in the combinations indicated in the appended claims. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION

The following descriptions should not be considered limiting in any way. With reference to the accompanying drawings, like elements are numbered alike:
FIG. 1 illustrates a schematic view of an elevator call control system, in accordance with an embodiment of the disclosure; and
FIG. 2 is a flow diagram illustrating a method of calling an elevator car from a mobile device, according to an embodiment of the present disclosure.

### DETAILED DESCRIPTION

A detailed description of one or more embodiments of the disclosed apparatus and method are presented herein by way of exemplification and not limitation with reference to the Figures.

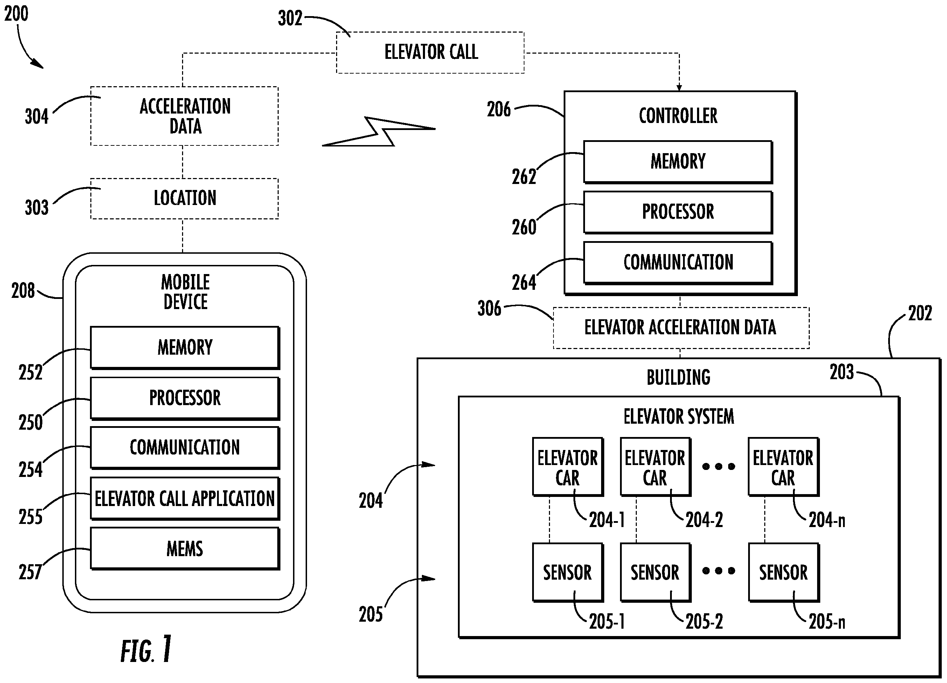

FIG. 1 depicts an elevator call control system 200 in an example embodiment. The elevator call control system 200 includes an elevator system 203 installed at a building 202. In some embodiments, the building 202 may be a building or a collection of buildings that may or may not be physically located near each other. The building 202 may include any number of floors. Persons entering the building 202 may enter at a lobby floor, or any other floor, and may go to a destination floor via one or more conveyance devices, such as the elevator system 203.

The elevator system 203 may be operably connected to one or more computing devices, such as a controller 206. The controller 206 may be configured to control dispatching operations for one or more elevator cars (e.g., elevator cars 204-1, 204-2, ... 204-n) associated with the elevator system 203. It is understood that the elevator system 203 may utilize more than one controller 206, and that each controller may control a group of elevators cars 204-1 and 204-2. Although two elevator cars 204-1 and 204-2 are shown in FIG. 1 including a first elevator car 204-1 and a second elevator car 204-2, it is understood that any number of elevators cars 204-n may be used in the elevator system 203. The elevator cars 204-1 and 204-2 may be located in the same hoistway or in different hoistways so as to allow coordination amongst elevator cars 204-1 and 204-2 in different elevator banks serving different floors. It is understood that other components of the elevator system 203 (e.g., drive, counterweight, safeties, etc.) are not depicted for ease of illustration.

The controller 206 may include a processor 260, memory 262 and communication module 264 as shown in FIG. 1. The processor 260 can be any type or combination of computer processors, such as a microprocessor, microcontroller, digital signal processor, application specific integrated circuit, programmable logic device, and/or field programmable gate array. The memory 262 is an example of a non-transitory computer readable storage medium tangibly embodied in the controller 206 including executable instructions stored therein, for instance, as firmware. The communication module 264 may implement one or more communication protocols as described in further detail herein.

Also shown in FIG. 1 is a mobile device 208. It is understood that the controller 206 may be in direct or indirect communication with one or more mobile devices 208. The mobile device 208 may be a mobile computing device that is typically carried by a person, such as, for example a smart phone, PDA, smart watch, tablet, laptop, etc. The mobile device 208 may include a touch screen (not shown). The mobile device 208 may include a processor 250, memory 252, communication module 254, and one or more Microelectromechanical system (MEMS) sensors 257, as shown in FIG. 1. The processor 250 can be any type or combination of computer processors, such as a microprocessor, microcontroller, digital signal processor, application specific integrated circuit, programmable logic device, and/or field programmable gate array. The memory 252 is an example of a non-transitory computer readable storage medium tangibly embodied in the mobile device 208 including executable instructions stored therein, for instance, as firmware. The communication module 254 may implement one or more communication protocols as described in further detail herein. The MEMS sensor 257 may be a sensor such as, for example, an accelerometer, a gyroscope, or a similar sensor known to one of skill in the art. The MEMS sensor 257 is configured to detect acceleration data 304 in one or more directions. The acceleration data 304 is transmitted to the controller 206. The acceleration data 304 may include acceleration and/or a derivative of acceleration, such as, for example, jerk, jounce, snap... etc.

The mobile device 208 may belong to a resident or employee of the building 202 who currently has access to the elevator system 203. Each mobile device 208 may transmit an elevator call 302 to the controller 206 and the controller 206 will move an elevator car 204 in response to the elevator call 302. The elevator call 302 may include a "boarding floor" and a "destination floor." The "boarding floor" is where the person with the mobile device 208 desires to board the elevator car 204 and the "destination floor" is where the person with the mobile device 208 intends to travel to. In one embodiment, the elevator call 302 may only include the "destination floor" and the "boarding floor" may be automatically determined by the elevator system 203. The elevator system 203 may automatically determine the "boarding floor" in response to a location 303 of the mobile device 208. In one example, if the location 303 of the mobile device 208 depicts that a person is on a first floor then the "boarding floor" may be the first floor. The location of the mobile device 208 may be detected using GPS or cellular data. The location of the mobile device 208 may also be detected through triangulation of wireless signals emitted from the mobile device 208 or signal strength between the mobile device 208 and another wireless capable device in communication with the controller 206. The location of the mobile device 208 may also be detected through signal detection between the mobile device 208 and another wireless capable device in electronic communication with the controller 206. The location of the mobile device 208 may be detected using any other desired and known location detection/position reference means. The wireless capable device may be a Bluetooth enable device or Wi-Fi enabled device/router in two non-limiting examples. The Embodiments herein generate a graphical user interface on the mobile device 208 through an elevator call application 255. The mobile device 208 may transmit an elevator call 302 through an elevator call application 255.

The mobile device 208 and the controller 206 communicate with one another. The mobile device 208 and the controller 206 may communicate over a wireless network, such as 802.11x (Wi-Fi), short-range radio (Bluetooth), cellular, satellite, etc. In some embodiments, the controller 206 may include, or be associated with (e.g., communicatively coupled to) a networked element, such as kiosk, beacon, hall call fixture, lantern, bridge, router, network node, door lock, elevator control panel, building intercom system, etc. The networked element may communicate with the mobile device 208 using one or more communication protocols or standards. For example, the mobile device 208 and the controller 206 may communicate with one another when proximate to one another (e.g., within a threshold distance). For example, the networked element may communicate with the mobile device 208 using near field communications (NFC). A connection between the mobile device 208 and the controller 206 may be direct between mobile device 208 and controller 206 or it may be through a web service. The connection also may include security elements such as VPN or authentication or encryption. In other embodiments, the controller 206 may establish connection with a mobile device 208 that is inside and/or outside of the building 202 in order to detect a location 303 of the mobile device 208. The location 303 of the mobile device 208 may be determined using various non-limiting technologies known in the art of indoor and outdoor locating including GPS, triangulation, trilateration, signal strength detection, accelerometer detection, gyroscopic detection, or barometric pressure sensing by way of non-limiting example. The triangulation and trilateration may use various wireless technologies including but not limited to Wi-Fi and Bluetooth. In example embodiments, the mobile device 208 communicates with the controller 206 over multiple independent wired and/or wireless networks. Embodiments are intended to cover a wide variety of types of communication between the mobile device 208 and controller 206, and embodiments are not limited to the examples provided in this disclosure.

The elevator system 203 also includes one or more sensors 205 (e.g., 205-1, 205-2, ... 205-n). The one or more sensors 205 are each configured to detect elevator acceleration data 306 associated with each elevator car 204. The elevator acceleration data 306 may include acceleration and/or a derivative of acceleration, such as, for example, jerk, jounce, snap..etc. The elevator acceleration data 306 may be communicated to the controller 206 from each of the plurality of sensors 205, discussed further below. The controller 206 is in electronic communication with each sensor 205 through a wired connection and/or wireless connection. In an alternative embodiment, each sensor 205 may be in indirect communication with the controller 206 through the mobile device 208. Although two sensors 205, including a first sensor 205-1 and a second sensor 205-2, are shown in FIG. 1, it is understood that any number of sensors 205-n may be used in the elevator system 203. Further, although only one sensor 205 is shown per elevator car 204 for ease of illustration it is understood that each elevator car 204 may contain one or more sensors 205. Alternatively, the sensors 205 may also be located off the elevator car 204. For example, the sensor 205 may measure elevator acceleration data 306 of the elevator car 204 as the elevator car 204 passes the sensor 205. In alternative embodiments, the acceleration data 306 may be determined through predictive analytics and/or command signals from the controller 206. For example, the controller 206 may command a desired acceleration to an elevator car 204 and the elevator acceleration data 306 may be equivalent to the desired acceleration commanded by the controller 206.

The controller 206 is configured to compare the acceleration data 304 received from the mobile device 208 to the elevator acceleration data 306 received from each elevator car 204 to determine whether a person carrying the mobile device 208 has boarded an elevator car 204 and which elevator car 204 they boarded. For example, once a person carrying a mobile device 208 enters a first elevator car 204-1 and the first elevator car 204-1 accelerates, the acceleration data 304 from the mobile device 208 should be about equal to the elevator acceleration data 306 associated with the first elevator car 204-1. The acceleration data 304, 306 may also include the actual acceleration rate, a derivative of the actual acceleration rate, a speed profile of the elevator car/mobile device, a time period of acceleration (i.e. time the acceleration started/stopped), or any combination thereof. Advantageously, through comparison of the acceleration data 304 from the mobile device 208 and the elevator acceleration data 306 from one or more elevator cars 204, the specific elevator car 204 that the person carrying the mobile device 208 has boarded may be identified. The acceleration data 304 from the mobile device 208 in the elevator car 204 and the acceleration data 306 of the elevator car 204 may not exactly match but it may be the closest match when comparing to the acceleration data 306 from other elevator cars. The closest match may be found through a highest probability determination and/or matching score. For example: the acceleration data 304 from the mobile device 208 in the elevator car 204 and the acceleration data 306 of the elevator car 204 may show that they are the only ones accelerating up while all other elevator cars are accelerating down. Further, it may be confirmed that the person carrying the mobile device 208 has boarded the same elevator car 204 that was sent by the controller 206 in response to the elevator call 302 from the elevator call application 255. In a first example, a person may submit an elevator call 302 through the elevator call application 255 and the controller 206 may assign a first elevator car 204-1 to pick up the person at the boarding floor. Then once the person carrying the mobile device 208 boards the first elevator car 204-1 and the first elevator car 204-1 begins to accelerate, the elevator acceleration data 306 of the first elevator car 204-1 may be about equal to the acceleration data 304 of the mobile device 208, thus confirming that the mobile device 208 is in the first elevator car 204-1.

In the event that the person carrying the mobile device 208 has boarded a different elevator car 204 than was sent by the controller 206 in response to the elevator call 302 from the elevator call application 255, the elevator car 204 containing the mobile device 208 may be re-assigned to the destination floor and the elevator car 204 called by the elevator call 302 originally may be reassigned. In a second example, a person may submit an elevator call 302 through the elevator call application 255 and the controller 206 may assign a first elevator car 204-1 to pick up the person at the boarding floor, but the person carrying the mobile device 208 boards the second elevator car 204-2 instead of the first elevator car 204-1. In this second example, when the second elevator car 204-2 begins to accelerate while the first elevator car 204-1 does not, the elevator acceleration data 306 of the second elevator car 204-2 may be about equal to the acceleration data 304 of the mobile device 208. In a third example, a person may submit an elevator call 302 through the elevator call application 255 and the controller 206 may assign a first elevator car 204-1 to pick up the person at the boarding floor, but the person carrying the mobile device 208 boards the second elevator car 204-2 instead of the first elevator car 204-1 and attempts to travel to a secure floor they are not authorized to enter. In this third example, when the second elevator car 204-2 begins to accelerate while the first elevator car 204-1 does not, the elevator acceleration data 306 of the second elevator car 204-2 may be about equal to the acceleration data 304 of the mobile device 208 and the controller may prevent the elevator car 204-2 from moving to that secure floor. Preventing may include re-routing the second elevator car 204-1 to another floor and stopping the second elevator car 204-1 in the elevator hoistway.

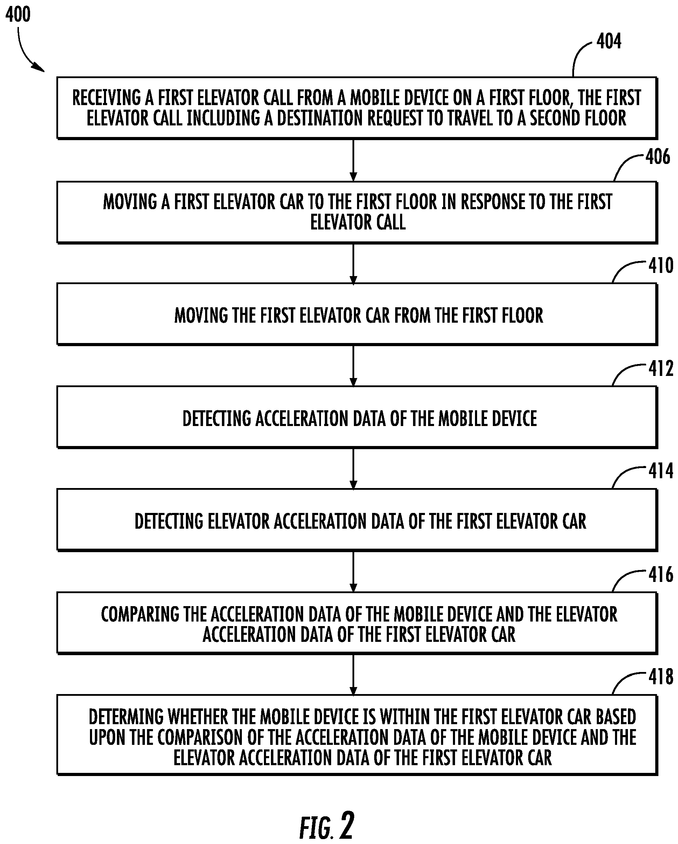

Referring now to FIG. 2 with continued reference to FIG. 1. FIG. 2 shows a flow chart of method 400 calling an elevator car 204 from a mobile device 208, in accordance with an embodiment of the disclosure. At block 404, a first elevator call 302 is received from a mobile device 208 on a first floor. The first elevator call 302 includes a destination request to travel to a second floor. The elevator call 302 may also include the first floor as the boarding floor or the controller 206 may determine that the first floor is the boarding floor. Multiple elevator calls 302 may be received from multiple mobile devices 208. The controller 206 will organize the incoming elevator calls 302 and allocate elevator cars 204 accordingly to service each elevator call 302. For example, a single elevator car 204 may be assigned to pick up multiple mobile devices 208 on a single floor and then transport each mobile device 208 to the same destination floor or different destination floors.

At block 406, a first elevator car 204-1 is moved to the first floor in response to the first elevator call 302. As the elevator car 204 is moving towards the first floor, the controller 206 may transmit elevator information to mobile devices 208 waiting for the elevator car 204 including but not limited to the estimate time of arrival (ETA) at the first floor, the speed of the elevator car 204, and the elevation of the elevator car 204.

The first elevator car 204-1 may be allowed to wait at the first floor for a selected period of time. The controller 206 may hold the first elevator car 204-1 at the first floor for the selected period of time waiting for mobile devices 208 that transmitted elevator calls 302 to board the first elevator car 204-1. At block 410, the first elevator car 204-1 is moved away from the first floor. The first elevator car 204-1 may begin to move away from the first floor after the selected period of time or if a person entering the first elevator car 204-1 has instructed the first elevator car 204-1 to move, for example by pressing a "door close" button.

At block 412, acceleration data 304 of the mobile device 208 is detected. At block 414, elevator acceleration data 306 of the first elevator car 204-1 is detected. In one embodiment, the acceleration data 304,306 is detected as soon as the elevator car 204-1 begins to move. In another embodiment acceleration data 304,306 is detected from the moment the elevator call 302 is placed. In one embodiment, acceleration data 304,306 detection may begin at any desired point in time. At block 416, the acceleration data of the mobile device 208 and the elevator acceleration data 306 of the first elevator car 204-1 are compared. At block 418, it is determined whether the mobile device 208 is within the first elevator car 204-1 based upon the comparison of the acceleration data 304 of the mobile device 208 and the elevator acceleration data 306 of the first elevator car 204-1.

It may be determined that the mobile device 208 is not within the first elevator car 204-1 when the acceleration data 304 of the mobile device 208 is not about equal to the elevator acceleration data 306 of the first elevator car 204-1. If it is determined that the mobile device 208 is not within the first elevator car 204-1 then the controller 206 may adjust the operation of the first elevator car 204-1 in response to determining that the mobile device 208 is not within the first elevator car 204-1.

The acceleration data 304 of the mobile device 208 may be time-stamped, thus each data point (i.e. acceleration event) within the acceleration data 304 of the mobile device 208 occurs at a specific time on the mobile device 208 referred to as a mobile device time-stamp. The mobile device time-stamp may be adjusted to a correct time reference such as, for example, controller time of the controller 206, so that the mobile device time-stamp of the acceleration events of the mobile device 208 may be compared to acceleration events of the elevator car 204 occurring at about the same time (i.e. within a tolerance time range). Two acceleration events may be considered to occur at about the same time if the time-stamps are within a tolerance time range of each other. The tolerance time range may be adjusted depending upon the specific elevator system 203. In a non-limiting example, the tolerance time range may be between 10 seconds and 0 seconds. In another non-limiting example, the tolerance time range may be between 5 seconds and 0 seconds. In another non-limiting example, the tolerance time range may be about 500mSec. However, it is understood that any desired number/value may be used for the tolerance time range.

In a first example, if the mobile device 208 registered a 'jerk' and the controller 206 registered a 'jerk' in the elevator car 204 within a tolerance time range of each other, then the "jerks" may be considered to have occurred at about the same time. Alternatively, in a second example, if the mobile device 208 registered the beginning of a continuous upward acceleration within a tolerance time range of when the controller 206 started directing the elevator car 204, then the beginning of the continuous upward acceleration may be considered to have occurred at about the same time as when the controller 206 started directing the elevator car 204.

In a third example, if there are two elevator cars 204 that are moving simultaneously and both get a "jerk" within that the same tolerance time range, then it is ambiguous as to which elevator car 204 the mobile device 208 is in. So additional acceleration data 304, 306 may need to be compared than just a single "jerk". If there are multiple "jerks" and "accelerations" within a 2-3 second window, a correlation can be done to compare the window of data between various elevator cars 204. The correlation can be done with a regression function or other statistical tool to match data set A to data set B. In a non-limiting example, if the statistical match shows a 95% confidence match to a particular elevator car 204 then the accelerometer data 304, 306 is about equal. The controller 206 may also take into account and consider other factors to increase the confidence level including but not limited to elevator system 203 knowledge of current elevator system 203 positions, such as, for example, elevator door states and elevator moving states in hoistway (e.g. elevator car 204 is idle, elevator car 204 is moving up, elevator car 204 is moving down,... etc.). For example, the elevator system position may include a position of elevator door operably connected to the elevator car 204.

The controller 206 may cancel the elevator calls 302 for the mobile devices 208 determined to not be within the first elevator car 204-1. Alternatively, instead of canceling the elevator call 302 outright when the mobile device 208 is not in the first elevator car 204-1, the controller 206 may call another elevator car 204 to pick up the mobile device 208 at a later time and possibly on a different floor. An alarm may be activated on the mobile device 208 when an elevator call 302 is canceled and/or transferred to another elevator car 204. The alarm may be audible, visual, and/or vibratory. Once it is determined which mobile devices 208 are within the first elevator car 204-1, the controller 206 may then adjust the run schedule for the first elevator car 204-1 by cancelling the destinations that are no longer needed due to mobile devices 208 failing to board the first elevator car 204-1. Further, if no mobile device 208 boards the first elevator car 204-1 then the first elevator car 204-1 may be reassigned to handle other elevator calls 302. For example, the first elevator car 204-1 may be reassigned to a second elevator call 302 if the mobile device 208 is not detected within the first elevator car 204-1.

It may be determined that the mobile device 208 is within the first elevator car 204-1 when the acceleration data 304 of the mobile device 208 is about equal to the elevator acceleration data 306 of the first elevator car 204-1. If it is determined that the mobile device 208 is within the first elevator car 204-1 then the first elevator car 204-1 continues to move away from the first floor and towards the second floor or another floor depending upon which mobile devices 208 are detected with the first elevator car 204-1. The controller 206 will then move the first elevator car 204-1 to destination floors of the mobile devices 208 that did board the first elevator car 204-1. If it is determined that the mobile device 208 is not within the first elevator car 204-1 then the controller 206 may automatically call another elevator car 204 or may issue a prompt through the elevator call application 255 asking the person where if they would like to call another elevator car 204.

The person carrying the mobile device 208 may accidently board a second elevator car 204-1 instead of the first elevator car 204-1 that was assigned to the first elevator call 302. In this case of this mistake, the controller 206 may detect elevator acceleration data 306 of a second elevator car 204-2 when the second elevator car 204-2 is moving away from the first floor, compare the acceleration data 304 of the mobile device 208 and the elevator acceleration data 306 of the second elevator car 204-2; and determine that the mobile device 208 is within the second elevator car 204-2 when the elevator acceleration data 306 of the mobile device 208 is about equal to the elevator acceleration data 306 of the second elevator car 204-2. Once it is determined that the mobile device 208 has boarded the second elevator car 204-2 instead of the first elevator car 204-1 the controller 206 may adjust operation of the first elevator car 204-1 in response to determining that the mobile device 208 is within the second elevator car 204-2. Adjusting may including moving the second elevator car 204-2 to the second floor that was the destination floor of the first elevator call 302. The controller 206 may automatically move the second elevator car 204-2 to the destination floor of the elevator call 302 or may issue a prompt through the elevator call application 255 asking the person where they would like the second elevator car 204-2 to go. Adjusting may also include calling another elevator car 204 to the floor where the second elevator car 204-2 was originally going. In the event that second elevator car continues moving to a destination floor of the second elevator car and not the elevator call 302, the controller 206 may move a third elevator car to the destination floor of the second elevator car to pick up the passenger and then the third elevator car may be assigned to the elevator call 302 to move the person to their destination floor.

While the above description has described the flow process of FIG. 2 in a particular order, it should be appreciated that unless otherwise specifically required in the attached claims that the ordering of the steps may be varied.

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of operating an elevator system (203), the method comprising:
receiving a first elevator call (302) from a mobile device (208) on a first floor, the first elevator call including a destination request to travel to a second floor;
moving a first elevator car to the first floor in response to the first elevator call;
moving the first elevator car (204-1) away from the first floor;
detecting acceleration data (304) of the mobile device;
detecting elevator acceleration data (306) of the first elevator car;
comparing the acceleration data of the mobile device and the elevator acceleration data of the first elevator car;
determining whether the mobile device is within the first elevator car based upon the comparison of the acceleration data of the mobile device and the elevator acceleration data of the first elevator car;
determining that the mobile device is not within the first elevator car when the acceleration data of the mobile device is not about equal to the elevator acceleration data of the first elevator car;
detecting elevator acceleration data of a second elevator car (204-2) when the second elevator car is moving away from the first floor;
comparing the acceleration data of the mobile device and the elevator acceleration data of the second elevator car;
determining that the mobile device is within the second elevator car when the acceleration data of the mobile device is about equal to the elevator acceleration data of the second elevator car; **characterized in that** the method further comprises:
determining that the second elevator car is moving towards a destination floor that is a secure floor;
determining that a person possessing the mobile device does not have access to the secure floor; and
preventing the second elevator car from moving to the secure floor.

2. The method of claim 1, further comprising:
adjusting operation of the first elevator car (204-1) in response to determining that the mobile device (208) is not within the first elevator car.

3. The method of claim 2, wherein the adjusting further comprises:
reassigning the first elevator car (204-1) to a second elevator call (302).

4. The method of any preceding claim, further comprising:
adjusting operation of the first elevator car (204-1) in response to determining that the mobile device (208) is within the second elevator car (204-2).

5. The method of any preceding claim, further comprising:
reassigning the second elevator car (204-2) to the first elevator call (302).

6. The method of any of any preceding claim, further comprising:
transmitting a prompt to the mobile device (208) requesting a destination floor for the second elevator car (204-2).

7. The method of any of any preceding claim, further comprising:
moving the second elevator car (204-2) to a destination floor of the second elevator car; and
moving a third elevator car to the destination floor of the second elevator car.

8. The method of claim 1, further comprising:
determining that the mobile device (208) is within the first elevator car (204-1) when the acceleration data (304) of the mobile device is about equal to the elevator acceleration data (306) of the first elevator car.

9. The method of any preceding claim, wherein:
the acceleration data (304) of the mobile device (208) includes at least one of an actual acceleration rate, a derivative of the actual acceleration rate, a speed profile of the mobile device, and a time period of acceleration.

10. The method of any preceding claim, wherein:
the elevator acceleration data (306) includes at least one of an actual acceleration rate, a derivative of the actual acceleration rate, a speed profile of the elevator car (204), and a time period of acceleration.

11. The method of any preceding claim, further comprising:
detecting an elevator system position of the elevator system (203), wherein the determining further comprises:
determining whether the mobile device (208) is within the first elevator car (204-1) based upon the elevator system position and the comparison of the acceleration data (304) of the mobile device and the elevator acceleration data of the first elevator car (306); and preferably wherein:
the elevator system position includes a position of elevator door operably connected to an elevator car of the elevator system; and/or wherein:
the elevator system position includes an elevator moving state of an elevator car of the elevator system.

12. A controller (206) for an elevator system (203) comprising:
a processor (260); and a memory (262) comprising computer-executable instructions that, when executed by the processor, cause the elevator system to perform operations, the operations comprising the method according to any preceding claim.

## Patentansprüche

1. Verfahren zum Betreiben eines Aufzugsystems (203), wobei das Verfahren Folgendes umfasst:
Empfangen eines ersten Aufzugrufs (302) von einer mobilen Vorrichtung (208) auf einer ersten Etage, wobei der erste Aufzugruf eine Zielanforderung, zu einer zweiten Etage zu fahren, beinhaltet;
Bewegen einer ersten Aufzugkabine zu der ersten Etage als Reaktion auf den ersten Aufzugruf;
Bewegen der ersten Aufzugkabine (204-1) weg von der ersten Etage;
Erfassen von Beschleunigungsdaten (304) der mobilen Vorrichtung;
Erfassen von Aufzugbeschleunigungsdaten (306) der ersten Aufzugkabine;
Vergleichen der Beschleunigungsdaten der mobilen Vorrichtung und der Aufzugbeschleunigungsdaten der ersten Aufzugkabine;
Bestimmen, ob die mobile Vorrichtung sich innerhalb der ersten Aufzugkabine befindet auf Grundlage des Vergleichs der Beschleunigungsdaten der mobilen Vorrichtung und der Aufzugbeschleunigungsdaten der ersten Aufzugkabine;
Bestimmen, dass die mobile Vorrichtung sich nicht in der ersten Aufzugkabine befindet, wenn die Beschleunigungsdaten der mobilen Vorrichtung nicht etwa gleich mit den Aufzugbeschleunigungsdaten der ersten Aufzugkabine sind;
Erfassen von Aufzugbeschleunigungsdaten einer zweiten Aufzugkabine (204-2), wenn die zweite Aufzugkabine sich weg von der ersten Etage bewegt;
Vergleichen der Beschleunigungsdaten der mobilen Vorrichtung und der Aufzugbeschleunigungsdaten der zweiten Aufzugkabine;
Bestimmen, dass die mobile Vorrichtung sich innerhalb der zweiten Aufzugkabine befindet, wenn die Beschleunigungsdaten der mobilen Vorrichtung etwa gleich den Aufzugbeschleunigungsdaten der zweiten Aufzugkabine sind; **dadurch gekennzeichnet, dass** das Verfahren ferner Folgendes umfasst:
Bestimmen, dass die zweite Aufzugkabine sich in Richtung einer Zieletage bewegt, bei der es sich um eine gesicherte Etage handelt;
Bestimmen, dass eine Person, die im Besitz der mobilen Vorrichtung ist, keinen Zutritt zu der gesicherten Etage hat; und
Verhindern, dass die zweite Aufzugkabine sich zu der gesicherten Etage bewegt.

2. Verfahren nach Anspruch 1, ferner umfassend:
Einstellen eines Betriebs der ersten Aufzugkabine (204-1) als Reaktion auf das Bestimmen, dass die mobile Vorrichtung (208) sich nicht innerhalb der ersten Aufzugkabine befindet.

3. Verfahren nach Anspruch 2, wobei das Einstellen ferner Folgendes umfasst:
Neuzuweisen der ersten Aufzugkabine (204-1) an einen zweiten Aufzugruf (302).

4. Verfahren nach einem der vorhergehenden Ansprüche, ferner umfassend:
Einstellen eines Betriebs der ersten Aufzugkabine (204-1) als Reaktion auf das Bestimmen, dass die mobile Vorrichtung (208) sich innerhalb der zweiten Aufzugkabine (204-2) befindet.

5. Verfahren nach einem der vorhergehenden Ansprüche, ferner umfassend:
Neuzuweisen der zweiten Aufzugkabine (204-2) an den ersten Aufzugruf (302).

6. Verfahren nach einem der vorhergehenden Ansprüche, ferner umfassend:
Übertragen einer Aufforderung an die mobile Vorrichtung (208), die eine Zieletage für die zweite Aufzugkabine (204-2) anfordert.

7. Verfahren nach einem der vorhergehenden Ansprüche, ferner umfassend:
Bewegen der zweiten Aufzugkabine (204-2) zu einer Zieletage der zweiten Aufzugkabine; und
Bewegen einer dritten Aufzugkabine zu der Zieletage der zweiten Aufzugkabine.

8. Verfahren nach Anspruch 1, ferner umfassend:
Bestimmen, dass die mobile Vorrichtung (208) sich innerhalb der ersten Aufzugkabine (204-1) befindet, wenn die Beschleunigungsdaten (304) der mobilen Vorrichtung etwa gleich den Aufzugbeschleunigungsdaten (306) der ersten Aufzugkabine sind.

9. Verfahren nach einem der vorhergehenden Ansprüche, wobei:
die Beschleunigungsdaten (304) der mobilen Vorrichtung (208) mindestens eines von einer tatsächlichen Beschleunigungsrate, einer Ableitung der tatsächlichen Beschleunigungsrate, einem Geschwindigkeitsprofil der mobilen Vorrichtung und einem Zeitraum der Beschleunigung beinhalten.

10. Verfahren nach einem der vorhergehenden Ansprüche, wobei:
die Aufzugbeschleunigungsdaten (306) mindestens eines von einer tatsächlichen Beschleunigungsrate, einer Ableitung der tatsächlichen Beschleunigungsrate, einem Geschwindigkeitsprofil der Aufzugkabine (204) und einem Zeitraum der Beschleunigung beinhalten.

11. Verfahren nach einem der vorhergehenden Ansprüche, ferner umfassend:
Erfassen einer Aufzugsystemposition des Aufzugsystems (203), wobei das Bestimmen ferner Folgendes umfasst:
Bestimmen, ob eine mobile Vorrichtung (208) sich innerhalb der ersten Aufzugkabine (204-1) befindet auf Grundlage der Aufzugsystemposition und des Vergleichs der Beschleunigungsdaten (304) der mobilen Vorrichtung und der Aufzugbeschleunigungsdaten der ersten Aufzugkabine (306); und vorzugsweise wobei:
die Aufzugsystemposition eine Position einer Aufzugtür beinhaltet, die mit einer Aufzugkabine des Aufzugsystems wirkverbunden ist; und/oder wobei:
die Aufzugsystemposition einen Aufzugbewegungszustand einer Aufzugkabine des Aufzugsystems beinhaltet.

12. Steuerung (206) für ein Aufzugsystem (203), die Folgendes umfasst:
einen Prozessor (260); und
einen Speicher (262), der computerausführbare Anweisungen umfasst, die, wenn sie von dem Prozessor ausgeführt werden, das Aufzugsystem veranlassen, Vorgänge durchzuführen, wobei die Vorgänge das Verfahren nach einem der vorhergehenden Ansprüche umfassen.

## Revendications

1. Procédé de fonctionnement d'un système d'ascenseur (203), le procédé comprenant :
la réception d'un premier appel d'ascenseur (302) d'un dispositif mobile (208) sur un premier étage, le premier appel d'ascenseur comportant une demande de destination pour se rendre à un second étage ;
le déplacement d'une première cabine d'ascenseur vers le premier étage en réponse au premier appel d'ascenseur ;
l'éloignement de la première cabine d'ascenseur (204-1) du premier étage ;
la détection de données d'accélération (304) du dispositif mobile ;
la détection de données d'accélération d'ascenseur (306) de la première cabine d'ascenseur ;
la comparaison des données d'accélération du dispositif mobile et des données d'accélération d'ascenseur de la première cabine d'ascenseur ;
le fait de déterminer si le dispositif mobile se trouve à l'intérieur de la première cabine d'ascenseur sur la base de la comparaison des données d'accélération du dispositif mobile et des données d'accélération d'ascenseur de la première cabine d'ascenseur ;
la détermination que le dispositif mobile ne se trouve pas à l'intérieur de la première cabine d'ascenseur lorsque les données d'accélération du dispositif mobile ne sont pas à peu près égales aux données d'accélération d'ascenseur de la première cabine d'ascenseur ;
la détection de données d'accélération d'ascenseur d'une deuxième cabine d'ascenseur (204-2) lorsque la deuxième cabine d'ascenseur s'éloigne du premier étage ;
la comparaison des données d'accélération du dispositif mobile et des données d'accélération d'ascenseur de la deuxième cabine d'ascenseur ;
la détermination que le dispositif mobile se trouve à l'intérieur de la deuxième cabine d'ascenseur lorsque les données d'accélération du dispositif mobile sont à peu près égales aux données d'accélération d'ascenseur de la deuxième cabine d'ascenseur ; **caractérisé en ce que** le procédé comprend en outre :
la détermination que la deuxième cabine d'ascenseur se déplace vers un étage de destination qui est un étage sécurisé ;
la détermination qu'une personne possédant le dispositif mobile n'a pas accès à l'étage sécurisé ; et
le fait d'empêcher la deuxième cabine d'ascenseur de se déplacer vers l'étage sécurisé.

2. Procédé selon la revendication 1, comprenant en outre :
le réglage du fonctionnement de la première cabine d'ascenseur (204-1) en réponse à la détermination que le dispositif mobile (208) ne se trouve pas à l'intérieur de la première cabine d'ascenseur.

3. Procédé selon la revendication 2, dans lequel le réglage comprend en outre :
la réattribution de la première cabine d'ascenseur (204-1) à un second appel d'ascenseur (302).

4. Procédé selon une quelconque revendication précédente, comprenant en outre :
le réglage du fonctionnement de la première cabine d'ascenseur (204-1) en réponse à la détermination que le dispositif mobile (208) se trouve à l'intérieur de la deuxième cabine d'ascenseur (204-2).

5. Procédé selon une quelconque revendication précédente, comprenant en outre :
la réattribution de la deuxième cabine d'ascenseur (204-2) au premier appel d'ascenseur (302).

6. Procédé selon une quelconque revendication précédente, comprenant en outre :
la transmission d'une invite au dispositif mobile (208) demandant un étage de destination pour la deuxième cabine d'ascenseur (204-2).

7. Procédé selon une quelconque revendication précédente, comprenant en outre :
le déplacement de la deuxième cabine d'ascenseur (204-2) vers un étage de destination de la deuxième cabine d'ascenseur ; et
le déplacement d'une troisième cabine d'ascenseur vers l'étage de destination de la deuxième cabine d'ascenseur.

8. Procédé selon la revendication 1, comprenant en outre :
la détermination que le dispositif mobile (208) se trouve à l'intérieur de la première cabine d'ascenseur (204-1) lorsque les données d'accélération (304) du dispositif mobile sont à peu près égales aux données d'accélération d'ascenseur (306) de la première cabine d'ascenseur.

9. Procédé selon une quelconque revendication précédente, dans lequel :
les données d'accélération (304) du dispositif mobile (208) comportent au moins l'un parmi un taux d'accélération réel, une dérivée du taux d'accélération réel, un profil de vitesse du dispositif mobile et une période d'accélération.

10. Procédé selon une quelconque revendication précédente, dans lequel :
les données d'accélération d'ascenseur (306) comportent au moins l'un parmi un taux d'accélération réel, une dérivée du taux d'accélération réel, un profil de vitesse de la cabine d'ascenseur (204) et une période d'accélération.

11. Procédé selon une quelconque revendication précédente, comprenant en outre :
la détection d'une position de système d'ascenseur du système d'ascenseur (203), dans lequel la détermination comprend en outre :
le fait de déterminer si le dispositif mobile (208) se trouve à l'intérieur de la première cabine d'ascenseur (204-1) sur la base de la position de système d'ascenseur et de la comparaison des données d'accélération (304) du dispositif mobile et des données d'accélération d'ascenseur de la première cabine d'ascenseur (306) ; et de préférence dans lequel :
la position de système d'ascenseur comporte une position de porte d'ascenseur reliée de manière opérationnelle à une cabine d'ascenseur du système d'ascenseur ; et/ou dans lequel :
la position de système d'ascenseur comporte un état de déplacement d'ascenseur d'une cabine d'ascenseur du système d'ascenseur.

12. Dispositif de commande (206) pour un système d'ascenseur (203) comprenant :
un processeur (260) ; et
une mémoire (262) comprenant des instructions exécutables par ordinateur qui, lorsqu'elles sont exécutées par le processeur, amènent le système d'ascenseur à exécuter des opérations, les opérations comprenant le procédé selon une quelconque revendication précédente.
